# EUROPÄISCHE PATENTSCHRIFT

(11) **EP 2 788 220 B1**
(45) Veröffentlichungstag und Bekanntmachung des Hinweises auf die Patenterteilung: **25.09.2019**
(21) Anmeldenummer: 12805660.3
(22) Anmeldetag: 07.12.2012
(51) Int. Cl.: B60L 13/10, B61B 13/08

(54) **FAHRZEUG EINER MAGNETSCHWEBEBAHN**
VEHICLE FOR A MAGNETIC LEVITATION TRACK
VÉHICULE D'UN TRAIN À SUSTENTATION MAGNÉTIQUE

(30) Priorität: 08.12.2011 DE 102011056180
(43) Veröffentlichungstag der Anmeldung: 15.10.2014
(73) Patentinhaber: Max Bögl Stiftung & Co. KG, 92369 Sengenthal (DE)
(72) Erfinder: BÖGL, Stefan, 92369 Sengenthal (DE)
(74) Vertreter: Bergmeier, Werner
(86) Internationale Anmeldenummer: PCT/EP2012/074745
(87) Internationale Veröffentlichungsnummer: WO 2013/083755

(56) Entgegenhaltungen:
- CN-A- 101 062 662
- DE-A1- 2 556 076
- DE-A1- 3 004 704
- JP-A- S5 755 704
- KR-A- 20110 054 176

## Beschreibung

Die vorliegende Erfindung betrifft ein Fahrzeug einer Magnetschwebebahn mit einem Wagenkasten und einer Antriebs- und Trageinrichtung sowie zumindest einem an dem Wagenkasten und der Antriebs- und Trageinrichtung befestigten Schwebegestell, wobei das Schwebegestell quer zur Längsachse des Antriebs- und Trageinrichtung auslenkbar ist und zwischen Schwebegestell und Antriebs- und Trageinrichtung ein Feder-Dämpfer-System angeordnet ist.

Fahrzeuge einer Magnetschwebebahn weisen in der Regel einen im Wesentlichen starren Wagenkasten auf, an welchem Antriebs- und Trageinrichtungen befestigt sind. Die Antriebs- und Trageinrichtungen müssen dem Fahrweg folgen und demnach auch in der Lage sein, Radien des Fahrweges entsprechend der vorgegebenen Raumkurve folgen zu können. Außerdem sind die zulässigen Spalte zwischen den Antriebs- und Trageinrichtungen des Fahrzeuges und dem Fahrweg äußerst gering, so dass insbesondere bei kleineren Radien des Fahrweges die Antriebs- und Trageinrichtungen relativ zum Wagenkasten beweglich ausgeführt sein müssen. Die Kinematik erfordert somit eine Beweglichkeit zwischen dem Wagenkasten und dem Antrieb. Die Beweglichkeit der Antriebs- und Trageinrichtungen relativ zu dem Wagenkasten kann 90 mm und mehr betragen.

Wesentlich für den Fahrkomfort der in dem Wagenkasten fahrenden Personen ist die Art der Lagerung der Antriebs- und Trageinrichtung in Bezug auf den Wagenkasten. Um eine möglichst komfortable Fahrt für die Insassen des Wagenkastens zu ermöglichen, sind die Antriebs- und Trageinrichtungen daher mit Feder-Dämpfer-Systemen ausgestattet, welche sowohl die Fliehkräfte als auch den Querversatz der Antriebs- und Trageinrichtung in Bezug auf den Wagenkasten sanft und gleichmäßig aufnehmen zu können.

Aus der DE 28 11 161 A1 ist ein Feder-Dämpfer-System bekannt, bei welchem ein Teil des Antriebs- und Tragsystems auf Blattfedern abgestützt ist. Außerdem ist seitlich ein Schwingungsdämpfer und eine Feder vorgesehen um die Seitenbewegung des Fahrzeuges, hervorgerufen durch den Fahrweg und äußere Kräfte, in befriedigender Weise zu dämpfen und eine weichere Kupplung zwischen Fahrzeug und Fahrweg zu erzielen.

Aus der US 7,404,361 B2 ist ein Fahrzeug bekannt, welches Module aufweist, welche quer zum Wagenkasten verschieblich sind. Der Wagenkasten ist auf jedem der Module abgestützt. Die Module weisen darüber hinaus Mittel zur seitlichen Führung des Fahrzeuges an der Schiene des Fahrwegs und zum Antrieb des Fahrzeuges auf. Die Module sind miteinander verbunden und können über eine Schwebevorrichtung relativ zum Wagenkasten verschoben werden. An den Verbindungsstellen der Module sind Luftfedern angeordnet, auf welchen der Wagenkasten gelagert ist.

DE 30 04 704 A1 und DE 25 56 076 A1 stellen den nächstkommenden Stand der Technik dar. Sie offenbaren jeweils ein Schwebegestell und eine Antriebs- und Trageinrichtung einer Magnetschwebebahn mit einem Wagenkasten. Das Schwebegestell weist eine Traverse und einen Träger auf, die gelenkig miteinander verbunden sind. Der Wagenkasten ist quer zur Längsachse der Antriebs- und Trageinrichtung auslenkbar und zwischen Schwebegestell und Antriebs- und Trageinrichtung ist ein Feder-Dämpfer-System angeordnet.

Nachteilig bei den bekannten Lösungen ist einerseits die geringe Beweglichkeit der Antriebs- und Trageinrichtung gegenüber dem Wagenkasten, wodurch nur relativ große Radien des Fahrwegs möglich sind und andererseits ein konstruktiv sehr aufwendiger Aufbau der Schwebeeinrichtung.

Aufgabe der vorliegenden Erfindung ist es somit eine konstruktiv einfache und sehr effektive und komfortable Möglichkeit der Verschiebung einer Antriebs- und Trageinrichtung in Bezug auf einen Wagenkasten eines Fahrzeuges einer Magnetschwebebahn zu schaffen, welche darüber hinaus geeignet ist auch sehr geringe Radien zu durchfahren.

Die Aufgabe wird gelöst mit einem Fahrzeug mit den Merkmalen des Anspruches 1.

Ein erfindungsgemäßes Fahrzeug einer Magnetschwebebahn weist einen Wagenkasten und eine Antriebs- und Trageinrichtung auf. An dem Wagenkasten und der Antriebs- und Trageinrichtung ist zumindest ein Schwebegestell befestigt, wobei das Schwebegestell quer zur Längsachse der Antriebs- und Trageinrichtung auslenkbar ist und zwischen Schwebegestell und Antriebs- und Trageinrichtung ein Feder-Dämpfer-System angeordnet ist. Das vorzugsweise mit Pendel integrierte Schwebegestell bewirkt, dass die Antriebs- und Trageinrichtung einem Fahrweg auch im Bereich von Kurven folgen kann, ohne dass der starre Wagenkasten unzulässigen Biegungen ausgesetzt wäre. Durch das Feder-Dämpfer-System werden Fliehkräfte und Kippbewegungen auf den Wagenkasten weitgehend reduziert. Fahrgäste in dem Wagenkasten können hierdurch komfortabel reisen. Das Schwebegestell weist eine Traverse und einen Träger auf, die gelenkig miteinander verbunden sind. An dem Träger ist der Wagenkasten befestigt, während die Traverse mit der Antriebs- und Trageinrichtung verbunden ist. Erfindungsgemäß verbindet die Traverse zwei gegenüberliegende Antriebs- und Trageinrichtungen, welche parallel entlang der Längsachse des Wagenkastens verlaufen und gemeinsam über das Schwebegestell verschoben werden. Die Traverse und der Träger sind mittels zweier Pendel gelenkig miteinander verbunden und die Traverse, die zwei Pendel und der an den Pendeln aufgehängte Träger bilden ein symmetrisches Gelenkviereck. Besonders vorteilhaft ist es dabei, dass eine konstruktiv sehr einfache und dennoch effektive Bauweise des Schwebegestells erfolgt. Die Krafteinleitung und das Verschieben der einzelnen Bauteile zueinander ist hierbei sehr einfach möglich.

Bei der Ausführung der Erfindung verbindet das Schwebegestell zwei parallel verlaufende Antriebs- und Trageinrichtungen miteinander. Besonders bei Fahrzeugen, welche zwei parallel verlaufende Antriebs- und Trageinrichtungen aufweisen, kann durch die Verbindung dieser beiden Antriebs- und Trageinrichtungen das Schwebegestell ein gleichzeitiges Verschieben der beiden parallelen Antriebs- und Trageinrichtungen bewirken.

Sind vorteilhafterweise zwei parallel verlaufende Antriebs- und Trageinrichtungen mittels Stützelementen miteinander verbunden, so erfolgt eine stabile und lagegenaue Ausrichtung der Antriebs- und Trageinrichtungen zueinander. Die Antriebs- und Trageinrichtung sind wesentlich dafür verantwortlich, dass die Spurweite des Fahrzeuges genau den Anforderungen entspricht. Dies ist wichtig für den störungsfreier Betrieb der Magnetschwebebahn. Durch die Stützelemente kann die exakte Spurweite des Fahrzeuges eingestellt und eingehalten werden.

Sind die Stützelemente mit den Antriebs- und Trageinrichtungen auf jeweils einer vertikalen, durch die Antriebs- und Trageinrichtungen verlaufenden Linie gelenkig verbunden, so werden besonders gute Dämpfungs- und Führungseigenschaften der Antriebs- und Trageinrichtungen in Bezug auf den Wagenkasten erreicht.

Ist zumindest ein Stützelement zwischen Traverse und einer der Antriebs- und Trageinrichtungen angeordnet, so wird eine gute Steifigkeit und zugleich Führung des Wagenkastens in Bezug auf die Antriebs- und Trageinrichtungen ermöglicht.

Ist zwischen Schwebegestell und Antriebs- und Trageinrichtung ein im Wesentlichen horizontal, insbesondere in y-Richtung wirkendes und/oder ein vertikal, insbesondere in z-Richtung wirkendes Feder-Dämpfer-System angeordnet, so ist in vorteilhafter Weise sichergestellt, dass das Fahrzeug gegenüber der Antriebs- und Trageinrichtung gefedert ist und einen komfortablen Fahrbetrieb ermöglicht. Das Fahrzeug ist dabei mit dem Schiebgestell fest verbunden. Das Schwebegestell ist ebenso wie der Wagenkasten über die Federung abgefedert. Schwingungen sowohl in y-Richtung als auch in z-Richtung können sehr gut absorbiert werden.

Als Federung hat sich insbesondere eine, vorzugsweise zwei Luftfedern pro Antriebs- und Trageinrichtung als vorteilhaft erwiesen. Die Luftfedern können bei Bedarf in ihrer Härte bzw. Steifigkeit variiert werden, so dass hierdurch eine zusätzliche Möglichkeit für einen komfortablen Betrieb des Fahrzeuges gegeben ist.

Um die Kinematikanforderungen zu erfüllen, ist vorgesehen, dass die Traverse und der Träger mittels Pendel miteinander verbunden sind. Das Fahrzeug ist hierdurch während einer Kurvenfahrt besonders ruhig zu halten.

Ist die Traverse fest mit der Federung und der Antriebs- und Trageinrichtung verbunden, so ist der Wagenkasten zusammen mit dem Schwebegestell auf der Federung gelagert und dadurch wiederum sehr komfortabel zu betreiben. Lediglich die Antriebs- und Trageinrichtung ist in vertikaler Richtung abgesehen von magnetischen Kräften ungefedert, beeinträchtigt aufgrund ihrer relativ geringen Masse allerdings das Gesamtsystem wenig.

Ist das Pendel vertikal unter der Antriebs- und Trageinrichtung sowie der Federung angeordnet, so wird hier auch ein System erhalten, welches optimal in vertikaler Richtung gefedert ist. Das Pendel kann aber auch in vorteilhafter Weise seitlich neben der Federung angeordnet sein. Dadurch ergibt sich ein günstigerer Einbauraum für das Pendel und dessen Beweglichkeit.

Die Traverse, zwei Pendel und der Träger bilden ein symmetrisches Gelenkviereck. Hierdurch wird sichergestellt, dass der Wagenkasten auch bei einer seitlichen Auslenkung des Schwebegestells stets horizontal bleibt. Eine seitliche Neigung kann durch dieses Gelenkviereck nicht erfolgen. Neigungen des Fahrzeuges können allenfalls durch die Federung in vertikaler Richtung erfolgen, wobei die Federung geregelt sein kann um die Neigung zu minimieren.

Weist das im Wesentlichen horizontal wirkende Feder-Dämpfer-System pro Antriebs- und Trageinrichtung zumindest einen mit dem Träger verbunden Dämpfer und zumindest eine mit der Traverse verbundene Feder auf, so sind seitliche Schläge und Kräfte, welche einerseits von dem Fahrzeug auf die Antrieb- und Trageinrichtung und andererseits auch umgegehrt von der Antriebs- und Trageinrichtung auf das Fahrzeug auftreten können, weitgehend eliminiert. Die Antriebs- und Trageinrichtung erhält durch diese Feder-Dämpfer-Lagerung auch die Möglichkeit sich an den Trassenverlauf des Fahrweges anzupassen und kleine Abweichungen auszugleichen.

Ist die Antriebs- und Trageinrichtung mit der Traverse durch ein im Wesentlichen vertikal in z-Richtung wirkendes Feder-Dämpfer-System verbunden, so sind Stöße und Schwenkbewegungen in vertikaler Richtung sehr gut zu absorbieren.

Vorzugsweise sind beidseitig des Wagenkastens mehrere, vorzugsweise mehr als fünf Antriebs- und Trageinrichtungen angeordnet. Die Antriebs- und Trageinrichtungen sind in der Regel unterhalb des Wagenkastens vorgesehen und erstrecken sich entlang einer Linie aneinandergereiht an beiden Seiten des Wagenkastens. Sie unterstützen damit das Fahrzeug im Wesentlichen über seine gesamte Länge.

Sind die Antriebs- und Trageinrichtungen einer Seite mit Gelenken miteinander verbunden, so können sie auch engen Kurvenradien des Fahrweges folgen. Die Gelenke ermöglichen eine optimale Anpassung der Antriebs- und Trageinrichtungen an den Verlauf des Fahrweges. Sie sind im Gegensatz zu dem starren Wagenkasten in Art einer Gliederkette miteinander verbunden.

Die Gelenke sind in erster Linie Drehgelenke, können aber auch derart ausgelegt sein, dass sie kleinere seitliche Verschiebungen erlauben.

Für eine optimale Kraftverteilung und eine einfache Verschiebung und Anpassung der Lage der Antriebs- und Trageinrichtungen bzw. der Schwebegestelle ist vorgesehen, dass an der mittleren Antriebs- und Trageinrichtung kein Schwebegestell angeordnet ist. Die mittlere Antriebs- und Trageinrichtung richtet sich somit selbständig, d. h. ohne direkte Verbindung mit der parallel verlaufenden mittleren Antriebs- und Trageinrichtung der anderen Wagenseite nach den vorhergehenden und nachfolgenden Antriebs- und Trageinrichtungen bzw. dem Fahrweg aus. Die entsprechende Anordnung der Schwebegestelle an den anderen Antriebs- und Trageinrichtungen stellt sicher, dass eine ausreichende Führung der Antriebs- und Trageinrichtungen bzw. des Fahrzeuges an dem Fahrweg vorhanden ist und keine unzulässigen Toleranzen oder Belastungen auftreten. Durch die entsprechende Anordnung der Schwebegestelle können diese auch ausreichend seitlich ausgelenkt werden um auch enge Kurven des Fahrweges durchfahren zu können.

In einer vorteilhaften Ausführung ist an der Antriebs- und Trageinrichtung eine Absetzvorrichtung und/oder eine Stromabnehmereinrichtung angeordnet. Insbesondere für den Einsatz von Kurzstator-Linearantrieben ist es erforderlich, dass das Fahrzeug mit Strom versorgt wird. Dies kann über die Stromabnehmereinrichtung, welche von der Antriebs- und Trageinrichtung abgegriffen wird, erfolgen. Die Stromabnehmereinrichtung ist vorzugsweise an der Unterseite der Antriebs- und Trageinrichtung angeordnet. Sie kann sich aber auch seitlich oder oben befinden.

Auch für den Fall des Abbremsens bzw. Stillstands des Fahrzeuges muss sichergestellt sein, dass keine Beschädigung des Fahrzeuges oder Fahrweges erfolgt. Dementsprechend ist eine Absetzvorrichtung vorgesehen, welche vorteilhafterweise an der Antriebs- und Trageinrichtung angeordnet ist.

Weitere Vorteile der Erfindung sind in den nachfolgenden Ausführungsbeispielen beschrieben. Es zeigt:
- **Fig. 1**: einen Querschnitt durch ein erfindungsgemäßes Fahrzeug einer Magnetschwebebahn und dessen Fahrwegträgers;
- **Fig. 2**: eine schematische Seitenansicht eines erfindungsgemäßen Fahrzeuges,
- **Fig. 3**: eine Ansicht von unten auf das Fahrzeug in skizzierter Darstellung,
- **Fig. 4**: einen weiteren Querschnitt durch ein erfindungsgemäßes Fahrzeug und
- **Fig. 5**: einen weiteren Querschnitt durch ein erfindungsgemäßes Fahrzeug.

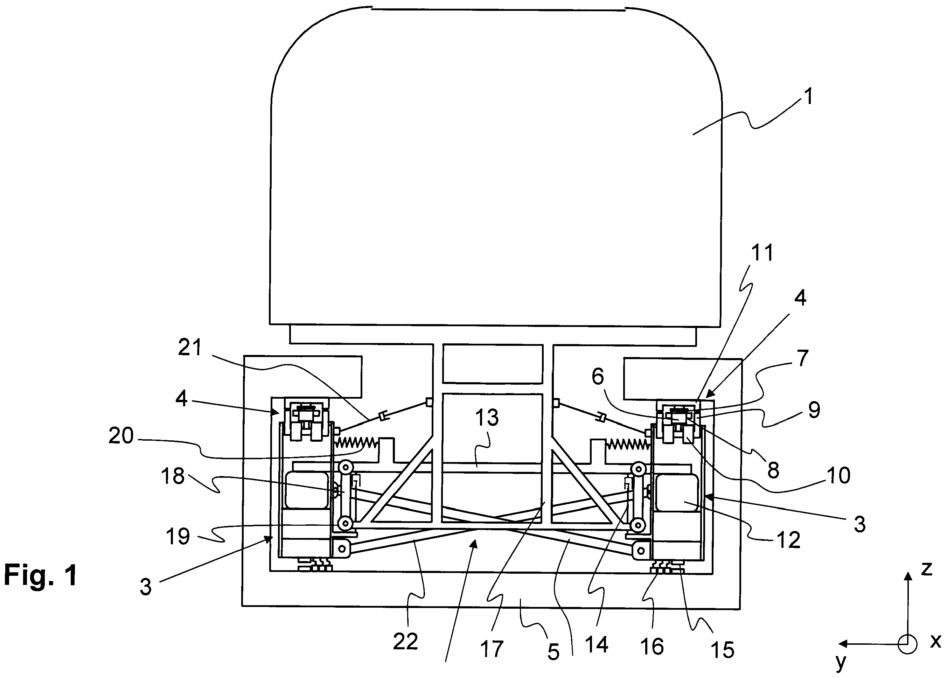

In Figur 1 ist ein Querschnitt durch ein erfindungsgemäßes Fahrzeug einer Magnetschwebebahn mit einem Wagenkasten 1, einem Schwebegestell 2 und Modulen 3, in welchen Antriebs- und Trageinrichtungen 4 angeordnet sind, gezeigt. Das Fahrzeug ist in einem Fahrwegträger 5 geführt, welcher die Module 3 und das Schwebegestell 2 C-förmig umgibt. Die Antriebs- und Trageinrichtung 4 weist Teile eines Linearmotors und einer Trageinrichtung auf. Der Linearmotor, hier ein Kurzstator-Linearmotor, beinhaltet einen Eisenkern 6 und eine Reaktionsschiene 7. In dem Eisenkern 6 sind Windungen 8 eingebettet. Der Linearmotor ist umgeben von einem U-förmigen Joch 9 und damit verbunden Spulen 10 sowie einer U-förmigen Reaktionsschiene 11. Die beiden Reaktionsschienen 7 und 11 sind an dem Fahrwegträger 5 befestigt. Eisenkern 6, Windungen 8 sowie Joch 9 und Spulen 10 befinden sich an dem Fahrzeug bzw. der Antriebs- und Trageinrichtung 4. Während die Trageinrichtung dafür sorgt, dass sich das Fahrzeug in einem Schwebezustand befindet, indem das Joch 9 bei einer Bestromung der Trageinrichtung an die Reaktionsschiene 11 angezogen wird, sorgt der Linearantrieb mit Eisenkern 6, Windung 8 sowie Reaktionsschiene 7 für einen Vortrieb des Fahrzeuges entlang einer x-Achse.

Die Antriebs- und Trageinrichtung 4 ist bezüglich der an dem Fahrzeug befestigten Teile in dem Modul 3 angeordnet. Das Modul 3 beinhaltet darüber hinaus eine Luftfeder 12, welche eine Traverse 13 des Schwebegestells 2 federnd mit dem Modul 3 verbindet. Je nach Auslegung können auch zwei oder mehr Luftfedern 12 verwendet werden. Die Federung erfolgt hierbei in erster Linie in z-, d.h. in vertikaler Richtung. Zwischen Modul 3 und Traverse 13 ist darüber hinaus noch ein Dämpfer 14 vorgesehen, welcher zusammen mit der Luftfeder 12 ein Feder-Dämpfer-System ergibt, durch welches das Fahrzeug bzw. der Wagenkasten 1 in vertikaler z-Richtung gegenüber dem Modul 3 elastisch gelagert ist.

An dem Modul 3 ist weiterhin eine Absetzvorrichtung 15 sowie eine Stromabnehmereinrichtung 16 vorgesehen. Die Absetzvorrichtung 15 wird benötigt um das Fahrzeug im Stillstand oder auch beim Bremsen in vorbestimmter Weise absetzen zu können. Die Absetzvorrichtung 15 weit beispielsweise Gleitschienen auf, welche einerseits an dem Modul 3 und andererseits an dem Fahrwegträger 5 befestigt sind und beim Absetzen zusammenwirken. Die Stromabnehmereinrichtung 16 sorgt dafür, dass Stromleitungen, welche entlang des Fahrwegträgers 5 verlegt sind, von dem Fahrzeug abgegriffen werden können und eine Stromversorgung der Antriebs- und Trageinrichtung gewährleistet ist. Im Falle, dass das Fahrzeug selbst eine Stromerzeugungseinrichtung aufweist, sind derartige Stromabnehmer, welche über den gesamten Fahrwegträger 5 verlegt sind, nicht erforderlich.

Das Schwebegestell 2 weist neben der Traverse 13 einen Träger 17 auf. Der Träger 17 ist mittels zweier Pendel 18 mit der Traverse 13 verbunden. Die Verbindung zwischen Traverse 13, der beiden Pendel 18 und Träger 17 erfolgt mittels vier Drehgelenken 19. Durch dieses Viergelenk ist eine neigungsfreie, seitliche Verschiebung des Wagenkastens 1, welcher an dem Träger 17 befestigt ist, möglich. Dies erlaubt einen besonders komfortablen Betrieb des Fahrzeuges. Um ein Aufschaukeln des Wagenkastens 1 zu vermeiden, ist in horizontaler Y-Richtungen ein Feder-Dämpfer-System angeordnet. Diese Feder-Dämpfer-System weist eine Feder 20 auf, welche zwischen Modul 3 und Traverse 13 angeordnet ist sowie einen Dämpfer 21 zwischen Modul 3 und Träger 17.

Um eine Stabilität der beiden parallel zueinander verlaufenden Module 3 zu gewährleisten, sind mehrere Stützelemente 22 vorgesehen. Die Stützelemente 22 verbinden die beiden gegenüberliegenden Module 3 stabil miteinander, so dass diese in einer aufrechten Position und stets parallel zueinander verbleiben. Damit kann die Spurweite des Fahrzeuges entsprechend der Vorgabe des Fahrweges eingestellt werden.

Die Darstellung der Figur 1 zeigt einen Querschnitt durch das erfindungsgemäße Fahrzeug. Das Fahrzeug weist mehrere derartiger Schwebegestelle 2 und Module 3 auf, die mit dem Wagenkasten 1 verbunden sind. Nachdem der Wagenkasten 1 in der Regel starr ausgebildet ist, ist es für die Antriebs- und Trageinrichtung 4, welche auch einem gekrümmten Fahrwegträger 5 zur Einhaltung der geforderten Raumkurve folgen können muss, erforderlich, dass diese quer zur Längsrichtung des Fahrzeuges bzw. quer zur x-Richtung in horizontaler y-Richtung gegenüber dem Wagenkasten 1 auslenkbar ist. Dies wird durch die Traverse 13 gewährleistet, welche durch das Gelenkviereck, bestehend aus Pendel 18, Drehgelenken 19, Traverse 13 und Träger 17 besteht, gewährleistet. Während der Träger 17, der fest mit dem starren Wagenkasten 1 verbunden ist, in y-Richtung unveränderlich ist, sind die Module 3 relativ zu dem Träger 17 in y-Richtung verschieblich ausgebildet. Hierdurch können sich die Module 3 mit den daran befindlichen Antriebs- und Trageinrichtungen 4 an dem Fahrwegträger 5 ausrichten, ohne dass es zu Behinderungen oder Verspannungen mit dem Wagenkasten 1 kommt.

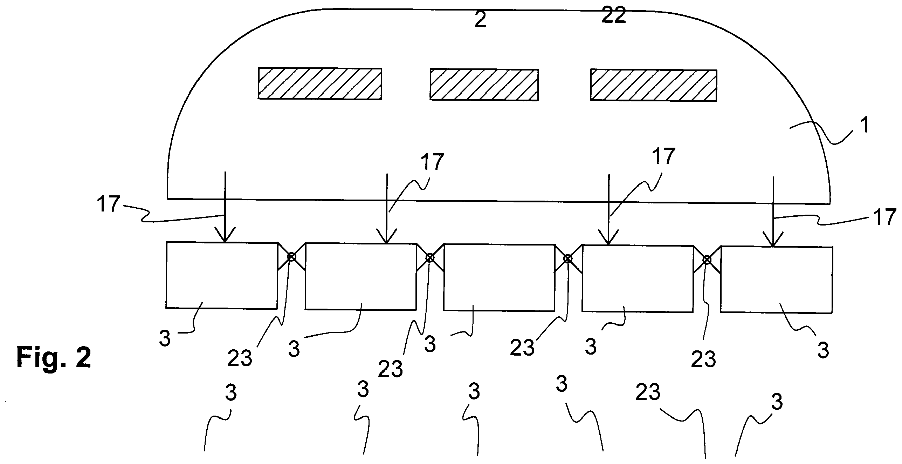

In Figur 2 ist ein erfindungsgemäßes Fahrzeug in Seitenansicht skizziert, welches aus einem Wagenkasten 1 und daran angeordneten Modulen 3 besteht. Der Fahrweg 5 greift in hier nicht dargestellter Weise zwischen Wagenkasten 1 und Module 3 ein und trägt das Fahrzeug. Der Wagenkasten 1 ist über die Träger 17 an vier der fünf Module 3 befestigt. Die Träger 17 sind durch die dargestellten Pfeile skizziert. Das mittlere der fünf Module 3 hat keine direkte Verbindung zu dem Wagenkasten 1, wodurch eine verspannungsfreie Fahrt auch auf engen Kurven des Fahrwegträgers 5 möglich ist. Nachdem das mittlere Modul 3 die stärkste Auslenkung bei einer Kurvenfahrt zulassen müsste, ist hierdurch eine besonders spannungsfreie Beweglichkeit des mittleren Modules 3 gewährleistet. Durch die örtlich ungleichmäßige Anordnung der Träger 17 an den Modulen 3 ist jedoch eine gleichmäßige Gewichtsverteilung des Wagenkastens 1 auf die verschiedenen Module 3 möglich. Hierdurch werden die einzelnen Module 3 gleichmäßig mit dem Gewicht des Fahrzeuges belastet.

Die Module 3 sind mittels Gelenken 23 miteinander verbunden. Diese Gelenke 23, insbesondere Kugelgelenke, erlauben eine Drehung der benachbarten Module 3 zueinander.

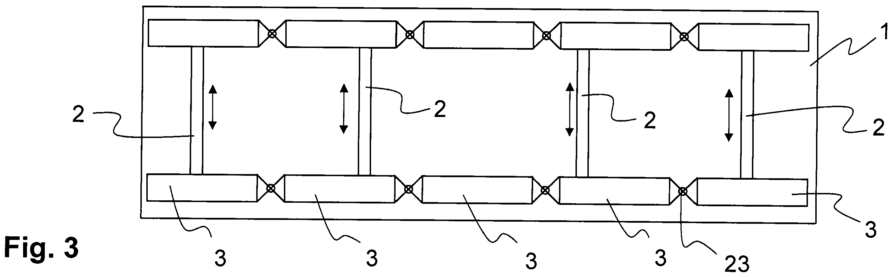

In Figur 3 ist eine Ansicht von unten auf das Fahrzeug in skizzierter Darstellung gezeigt. Daraus ist ersichtlich, dass zwei Reihen mit jeweils fünf Modulen 3 unter dem Wagenkasten 1 angeordnet sind. Jede Reihe ist mit den Gelenken 23 verbunden. Die jeweils beiden äußeren Module 3 sind mit den Schwebestellen 2 verbunden. Hierdurch ist eine Verschiebung in Doppelpfeilrichtung der Module 3 relativ zur Längsachse des Wagenkastens 1 möglich. Die beiden mit dem Schwebegestell 2 verbundenen Module 3 bleiben jedoch parallel zueinander, wodurch eine exakte Führung des Fahrzeuges an dem Fahrwegträger 5 gewährleistet ist.

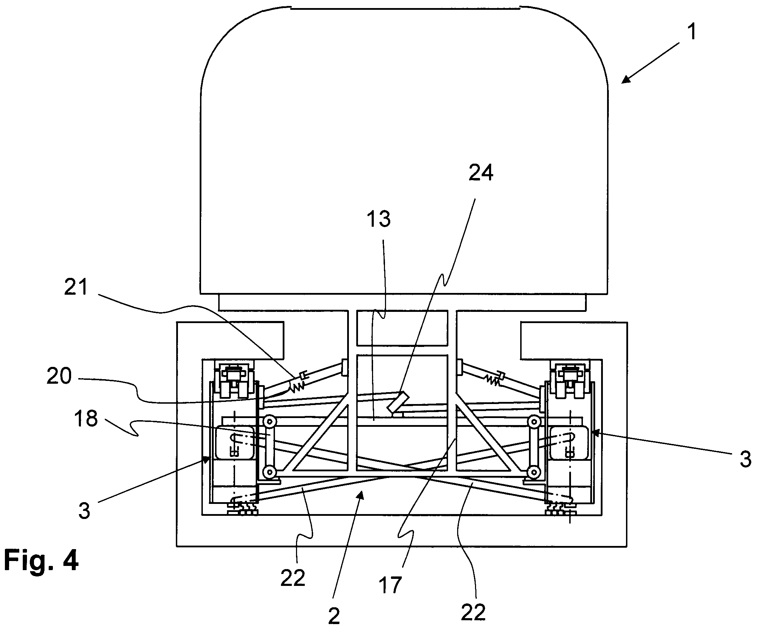

In Figur 4 ist eine Abwandlung der Figur 1 des Querschnitts durch ein erfindungsgemäßes Fahrzeug dargestellt. Dabei sind die Anlenkpunkte der Stützelemente 22 in der Mittelachse der Luftfedern 12 angeordnet, d.h. die Stützelemente 22 sind mit den Antriebs- und Trageinrichtungen auf jeweils einer vertikalen, durch die Antriebs- und Trageinrichtungen 3 verlaufenden Linie gelenkig verbunden. Dies ergibt eine verspannungs- und drehmomentfreie Beweglichkeit der Einrichtung. In diesem Zusammenhang ist auch die Feder-Dämpferkombination 20,21 zwischen dem Träger 17 des Schwebegestells 2 und dem Modul 3 angeordnet. Zwischen den beiden Modulen 3 befindet sich eine Drehgelenkanordnung 24. Insgesamt wird durch einen solchen Aufbau des Fahrzeuges der Fahrkomfort gegenüber dem Aufbau der Figur 1 zusätzlich verbessert.

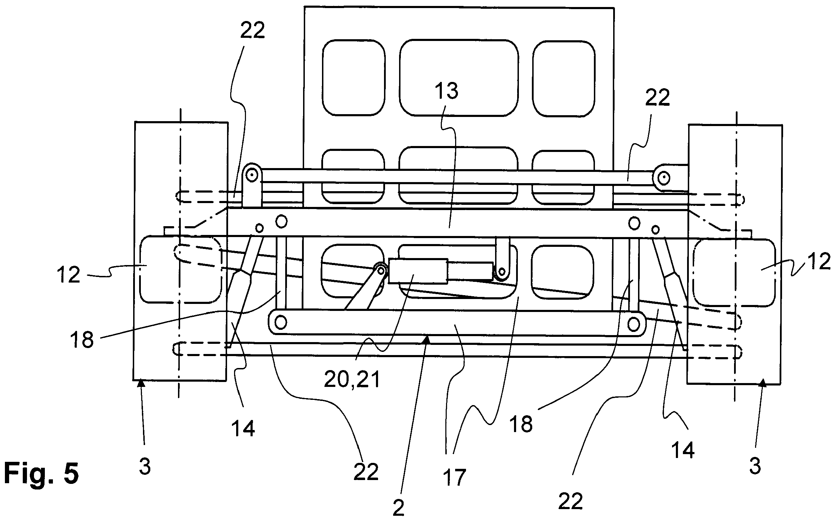

In Figur 5 ist ein weiteres Ausführungsbeispiel der Erfindung gezeigt. Ein Stützelement 22 verbindet ein Modul 3 mit der Traverse 13. Außerdem ist die Traverse 13 über ein Feder-Dämpfer-System 20,21 mit dem Träger 17 des Schwebegestells 2 verbunden. Damit wird die Pendelbewegung des Schwebegestells 2 beispielsweise bei Kurvenfahrt gedämpft.

Die Erfindung ist nicht auf die dargestellten Ausführungsbeispiele beschränkt. Insbesondere die Verteilung der Schwebegestelle 2 an dem Wagenkasten 1 oder auch die exakte Ausführung mit den dargestellten Feder-Dämpfer-Systemen kann im Rahmen der Erfindung abgewandelt werden.

### Bezugszeichenliste

- 1: Wagenkasten
- 2: Schwebegestell
- 3: Module
- 4: Antriebs- und Trageinrichtung
- 5: Fahrwegträger
- 6: Eisenkern
- 7: Reaktionsschiene
- 8: Windungen des Eisenkerns 6
- 9: Joch
- 10: Spulen
- 11: Reaktionsschiene
- 12: Luftfeder
- 13: Traverse
- 14: Dämpfer
- 15: Absetzvorrichtung
- 16: Stromabnehmereinrichtung
- 17: Träger des Schwebegestells 2
- 18: Pendel
- 19: Drehgelenk
- 20: Feder
- 21: Dämpfer
- 22: Stützelement
- 23: Gelenke
- 24: Drehgelenkanordnung

## Patentansprüche

1. Fahrzeug einer Magnetschwebebahn mit einem Wagenkasten (1) und einer Antriebs- und Trageinrichtung (4) sowie zumindest einem an dem Wagenkasten (1) und der Antriebs- und Trageinrichtung (4) befestigten Schwebegestell (2), wobei das Schwebegestell (2) eine Traverse (13) und einen Träger (17) aufweist, die gelenkig miteinander verbunden sind, wobei der Wagenkasten (1) fest auf dem Träger (17) befestigt ist und der Wagenkasten (1) quer zur Längsachse der Antriebs- und Trageinrichtung (4) auslenkbar ist und zwischen Schwebegestell (2) und Antriebs- und Trageinrichtung (4) ein Feder-Dämpfer-System (12,14;20,21) angeordnet ist, **dadurch gekennzeichnet, dass** die Traverse (13) zwei parallel verlaufende sich gegenüberliegende Antriebs- und Trageinrichtungen (4) miteinander verbindet, die Traverse (13) und der Träger (17) mittels zweier Pendel (18) gelenkig miteinander verbunden sind und dass die Traverse (13), die zwei Pendel (18) und der an den Pendeln (18) aufgehängte Träger (17) ein symmetrisches Gelenkviereck bilden.

2. Fahrzeug nach dem vorherigen Anspruch, **dadurch gekennzeichnet, dass** die zwei parallel verlaufenden Antriebs- und Trageinrichtungen (4) mittels Stützelementen (22) miteinander verbunden sind.

3. Fahrzeug nach Anspruch 2, **dadurch gekennzeichnet, dass** die Stützelemente (22) mit den Antriebs- und Trageinrichtungen (4) auf jeweils einer vertikalen, durch die Antriebs- und Trageinrichtungen (4) verlaufenden Linie gelenkig verbunden sind.

4. Fahrzeug nach einem oder mehreren der vorherigen Ansprüche, **dadurch gekennzeichnet, dass** zumindest ein Stützelement (22) zwischen Traverse (13) und einer der Antriebs- und Trageinrichtungen (4) angeordnet ist.

5. Fahrzeug nach einem oder mehreren der vorherigen Ansprüche, **dadurch gekennzeichnet, dass** zwischen Schwebegestell (2) und Antriebs- und Trageinrichtung (4) ein im Wesentlichen horizontal, insbesondere in y-Richtung wirkendes und/oder ein vertikal, insbesondere in z-Richtung wirkendes Feder-Dämpfer-System (12,14;20,21)angeordnet ist.

6. Fahrzeug nach Anspruch 5, **dadurch gekennzeichnet, dass** die vertikal wirkende Federung eine, vorzugsweise zwei Luftfeder/n (12) pro Antriebs- und Trageinrichtung (4) aufweist.

7. Fahrzeug nach einem oder mehreren der vorherigen Ansprüche, **dadurch gekennzeichnet, dass** die Traverse (13) mit der Federung (12) und der Antriebs- und Trageinrichtung (4) verbunden ist.

8. Fahrzeug nach einem oder mehreren der vorherigen Ansprüche, **dadurch gekennzeichnet, dass** das im Wesentlichen horizontal in y-Richtung wirkende Feder-Dämpfer-System (20,21) pro Antriebs- und Trageinrichtung (4) zumindest einen mit dem Träger (17) verbundenen Dämpfer (21) und zumindest eine mit der Traverse (13) verbundene Feder (20) aufweist.

9. Fahrzeug nach einem oder mehreren der vorherigen Ansprüche, **dadurch gekennzeichnet, dass** die Antriebs- und Trageinrichtung (4) mit der Traverse (13) durch ein im Wesentlichen vertikal in z-Richtung wirkendes Feder-Dämpfer-System (12,14) verbunden ist.

10. Fahrzeug nach einem oder mehreren der vorherigen Ansprüche, **dadurch gekennzeichnet, dass** beidseitig des Wagenkastens (1) mehrere, vorzugsweise jeweils fünf Antriebs- und Trageinrichtungen (4) angeordnet sind.

11. Fahrzeug nach einem oder mehreren der vorherigen Ansprüche, **dadurch gekennzeichnet, dass** die Antriebs- und Trageinrichtungen (4) einer Seite mit Gelenken (23) miteinander verbunden sind.

12. Fahrzeug nach einem oder mehreren der vorherigen Ansprüche, **dadurch gekennzeichnet, dass** an den mittleren Antriebs- und Trageinrichtungen (4) kein Schwebegestell (2) angeordnet ist.

13. Fahrzeug nach einem oder mehreren der vorherigen Ansprüche, **dadurch gekennzeichnet, dass** an der Antriebs- und Trageinrichtung (4) eine Absetzvorrichtung (15) und/oder eine Stromabnehmereinrichtung (16) angeordnet ist.

## Claims

1. Vehicle for a magnetic levitation railway having a coach body (1) and a propulsion and supporting device (4) as well as at least one levitation frame (2) fastened on the coach body (1) and the propulsion and supporting device (4), whereas the levitation frame (2) has a traverse (13) and a carrier (17) which are connected to each other in an articulated fashion, whereas the coach body (1) is arranged on the carrier (17) in a fixed manner and the coach body (1) can be deflected transversely to the longitudinal axis of the propulsion and supporting device (4) and a spring suspension system (12, 14; 20, 21) is arranged between the levitation frame (2) and propulsion and supporting device (4), **characterized in that** the traverse (13), connects two propulsion and supporting devices (4) running in parallel with each other, the traverse (13) and the carrier (17) are connected to each other in an articulated fashion by means of two pendulums (18) and that the traverse (13), two pendulums (18) and the carrier (17) hanging on the pendulums (18), form a symmetric four-joint linkage..

2. Vehicle according to the preceding claim, **characterized in that** the two propulsion and supporting devices (4) running in parallel are connected to each other by means of support elements (22).

3. Vehicle according to claim 2, **characterized in that** the support elements (22) are connected to the propulsion and supporting devices (4) in an articulated fashion at a vertical line running through the propulsion and supporting devices (4).

4. Vehicle according to one or more of the preceding claims, **characterized in that** at least one support element (22) is arranged between the traverse (13) and one of the propulsion and supporting devices (4).

5. Vehicle according to one or more of the preceding claims, **characterized in that** an essentially horizontal spring suspension system (12,14; 20,21), in particular operating in a y-direction, and/or an essentially vertical spring suspension system (12,14;20,21), in particular operating in a z-direction, is arranged between the levitation frame (2) and the propulsion and supporting device (4).

6. Vehicle according to claim 5, **characterized in that** the vertically operating suspension features one, preferably two air spring(s) (12) for each propulsion and supporting device (4).

7. Vehicle according to one or more of the preceding claims, **characterized in that** the traverse (13) is connected to the suspension (12) and the propulsion and supporting device (4).

8. Vehicle according to one or more of the preceding claims, **characterized in that** the essentially horizontal spring suspension system (20, 21), operating in a y-direction, for each propulsion and supporting device (4) features at least one damper (21) connected to the carrier (17) and at least one spring (20) connected to the traverse (13).

9. Vehicle according to one or more of the preceding claims, **characterized in that** the propulsion and supporting device (4) is connected to the traverse (13) through an essentially vertical spring suspension system operating in a z-direction (12,14).

10. Vehicle according to one or more of the preceding claims, **characterized in that** several, preferably five propulsion and supporting devices are arranged on both sides of the coach body (1).

11. Vehicle according to one or more of the preceding claims, **characterized in that** the propulsion and supporting devices (4) of a side are connected to each other with articulated joints (23).

12. Vehicle according to one or more of the preceding claims, **characterized in that** a levitation frame (2) is not arranged on the middle propulsion and supporting device (4).

13. Vehicle according to one or more of the preceding claims, **characterized in that** a set-off device (15) and/or a collector device (16) are/is arranged on the propulsion and supporting device (4).

## Revendications

1. Voiture d'un train à lévitation magnétique comportant une caisse (1) de voiture et un dispositif moteur et porteur (4) ainsi qu'au moins un châssis de lévitation (2) fixé à la caisse (1) de voiture et au dispositif moteur et porteur (4), le châssis de lévitation (2) comportant une traverse (13) et un support (17) qui sont reliés l'un à l'autre de manière articulée, la caisse (1) de voiture étant fixée de manière fixe sur le support (17) et la caisse (1) de voiture pouvant être déviée perpendiculairement à l'axe longitudinal du dispositif moteur et porteur (4), et un système d'amortisseur à ressort (12, 14 ; 20, 21) étant disposé entre le châssis de lévitation (2) et le dispositif moteur et porteur (4), **caractérisée en ce que** la traverse (13) relie l'un à l'autre deux dispositifs moteurs et porteurs (4) parallèles l'un à l'autre et opposés l'un à l'autre, **en ce que** la traverse (13) et le support (17) sont reliés l'un à l'autre de manière articulée au moyen de deux pendules (18) et **en ce que** la traverse (13), les deux pendules (18) et le support (17) suspendu aux pendules (18) forment un quadrilatère articulé symétrique.

2. Voiture selon la revendication précédente, **caractérisée en ce que** les deux dispositifs moteurs et porteurs (4) s'étendant parallèlement sont reliés l'un à l'autre au moyen d'éléments de support (22).

3. Voiture selon la revendication 2, **caractérisée en ce que** les éléments de support (22) sont reliés de manière articulée aux dispositifs moteurs et porteurs (4) sur une ligne verticale respective s'étendant à travers les dispositifs moteurs et porteurs (4).

4. Voiture selon l'une ou plusieurs des revendications précédentes, caractérisée en ce qu'au moins un élément de support (22) est disposé entre la traverse (13) et l'un des dispositifs moteurs et porteurs (4).

5. Voiture selon l'une ou plusieurs des revendications précédentes, **caractérisée en ce qu'**un système d'amortisseur à ressort (12, 14 ; 20, 21) agissant essentiellement horizontalement, en particulier dans la direction y, et/ou verticalement, en particulier dans la direction z, est disposé entre le châssis de lévitation (2) et le dispositif moteur et porteur (4).

6. Voiture selon la revendication 5, **caractérisée en ce que** la suspension agissant verticalement comporte un, de préférence deux ressort(s) pneumatique(s) (12) par dispositif moteur et porteur (4).

7. Voiture selon l'une ou plusieurs des revendications précédentes, **caractérisée en ce que** la traverse (13) est reliée à la suspension (12) et au dispositif moteur et porteur (4).

8. Voiture selon l'une ou plusieurs des revendications précédentes, **caractérisée en ce que** le système d'amortisseur à ressort (20, 21) agissant essentiellement horizontalement, dans la direction y, comporte par dispositif moteur et porteur (4) au moins un amortisseur (21) relié au support (17) et au moins un ressort (20) relié à la traverse (13).

9. Voiture selon l'une ou plusieurs des revendications précédentes, **caractérisée en ce que** le dispositif moteur et porteur (4) est relié à la traverse (13) par un système d'amortisseur à ressort (12, 14) agissant essentiellement verticalement, dans la direction z.

10. Voiture selon l'une ou plusieurs des revendications précédentes, **caractérisée en ce que** plusieurs, de préférence respectivement cinq dispositifs moteurs et porteurs (4) sont disposés sur les deux côtés de la caisse (1) de voiture.

11. Voiture selon l'une ou plusieurs des revendications précédentes, **caractérisée en ce que** les dispositifs moteurs et porteurs (4) d'un côté sont reliés entre eux par des articulations (23).

12. Voiture selon l'une ou plusieurs des revendications précédentes, **caractérisée en ce qu'**aucun châssis de lévitation (2) n'est disposé aux dispositifs moteurs et porteurs (4) centraux.

13. Voiture selon l'une ou plusieurs des revendications précédentes, caractérisée en ce qu'un dispositif de dépose (15) et/ou un dispositif de pantographe (16) est disposé sur le dispositif moteur et porteur (4).
